# EUROPEAN PATENT APPLICATION

(11) **EP 3 890 154 A1**
(43) Date of publication of application: **06.10.2021**
(21) Application number: 20166699.7
(22) Date of filing: 30.03.2020
(51) Int. Cl.: H02J 7/34, H02M 3/335

(54) **BATTERY SYSTEM**

(71) Applicant: Samsung SDI Co., Ltd., Gyeonggi-do 17084 (KR)
(72) Inventor: Fritz, Jürgen, 8020 Graz (AT); Kurcik, Peter, 8505 St. Nikolai im Sausal (AT)
(74) Representative: Gulde & Partner

(57) **Abstract**

The present invention relates to a battery system (100) for an electric vehicle (200), wherein the battery system (100) comprises a high voltage, HV, battery subsystem (101) having a battery cell stack (51) with a plurality of battery cells (10) electrically connected between stack nodes (11, 12) and a low voltage, LV, battery subsystem (102) having a LV battery (52) and a supply node (13) connected to the LV battery (52). The battery system (100) further comprises a DCDC converter (60) with a primary coil (61) in the HV battery subsystem (101) and a secondary coil (62) in the LV battery subsystem (102), wherein the primary coil (61) is connected to one of the stack nodes (11, 12) via a switch (14). A threshold signal (70) indicative of a voltage at the supply node (13) is generated in the LV battery subsystem (102) and is transmitted to the HV battery subsystem (101), and the state of the switch (14) is controlled based on the threshold signal (70). The present invention further relates to a vehicle (200) with a battery system (100) of the present invention.

## Description

### Field of the Invention

The present invention relates to a battery system with an integrated redundant power supply for a low voltage board net, particularly to a battery system for an electric vehicle with an EMC optimized redundant power supply, as well as to a vehicle with such a battery system.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for an electric vehicle. That is, the battery module is formed by interconnecting the electrode terminals of the plurality of unit battery cells depending on a required amount of power and in order to realize a high-power rechargeable battery, e.g. for an electric vehicle. Battery modules are mechanically and electrically integrated, equipped with a thermal management system and set up for communication with electrical loads in order to form a battery system.

For meeting the dynamic power demands of the various electrical loads connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters a battery system usually comprises one or more of a battery management system (BMS), a battery management unit (BMU), and a cell supervision circuit (CSC). Such control units may be an integral part of the battery system and disposed within a common housing or may be part of a remote control unit communicating with the battery system via a suitable communication bus. These control units may perform various functions in the battery system. A CSC is usually equipped on battery module level and is configured for measuring cell voltages and temperatures and to provide cell balancing within the modules. A plurality of CSCs is usually connected for data transmission among each other and with a BMU. The BMU receives the voltage data from all battery modules, controls the battery system as a whole, and provides a communication interface to an exterior of the battery system for communicating with the electrical consumers, e.g. via a suitable communication bus such as a CAN or SPI interface.

For supplying an electric motor of a vehicle, a high voltage, e.g., above 48 V, has to be supplied by the battery system and the battery system has to be connected to a high voltage, HV, board net for supplying the electric motor. However, the control units of the battery system and/or of the vehicle usually operate at lower voltages. A vehicle thus usually requires an additional low voltage, LV, supply, such as e.g., a 12 V lead acid battery which is connected to a LV board net. In such system, the security relevant components of the vehicle as well as of the HV battery system are often supplied by the LV battery in order to guarantee reliable function of these components even in a fault state of the HV board net.

In order to avoid excessive draining of the LV battery in such system or the loss of the security relevant components, a redundant power supply may be provided for supplying the LV board net from the HV battery system via a DCDC converter when required. However, such redundant power supply systems should be galvanic isolated from the LV board net, wherein a galvanically isolated DCDC converter may cause electromagnetic interference. According to the prior art, countermeasures such as filters or shielding means are foreseen, which increases the costs and the construction space requirements of the electric vehicle.

It is thus an object of the present invention to overcome or at least reduce the disadvantages of the prior art and to provide a battery system with an integrated low voltage power supply, which allows reducing the costs and construction space requirements of an electric vehicle.

### Description of the Invention

One or more of the drawbacks of the prior art could be avoided or at least reduced by means of the present disclosure, according to which a battery system for an electric vehicle is provided that comprises a high voltage, HV, battery subsystem having a battery cell stack with a plurality of battery cells electrically connected between stack nodes. Therein, the plurality of battery cells may be connected in series and/or in parallel between a first and a second stack node, e.g., in a *XsYp* configuration. The HV battery subsystem further comprises a HV battery net configured for connecting HV loads to the battery cell stack, such as e.g., an electric motor of the vehicle, which preferably is an electric or hybrid vehicle.

The battery system of the present disclosure further comprises a low voltage, LV, battery sub system having a LV battery, such as e.g., a 12 V lead acid battery. The LV battery may be any other kind of battery, while an operational voltage usually supplied by the LV battery is lower than an operational voltage usually supplied by the HV battery stack. The LV battery subsystem further comprises a supply node that is connected to the LV battery. In other words, the supply node is power supplied by the LV battery. Particularly, the LV battery may comprise a first LV terminal and a second LV terminal and the supply node is connected to one of the first LV terminal and the second LV terminal. The supply node is preferably configured to power supply at least one security relevant load. Hence, the power supply to the supply node can be considered a security relevant feature, e.g., with respect to ASIL B/C.

The battery system of the present disclosure further comprises a DCDC converter having a primary coil that is disposed in the HV battery system and further having a secondary coil that is disposed in the LV battery system. Above that the DCDC converter may comprise additional elements, such as e.g., analogue circuit elements or control units. In any case, the voltage conversion in the DCDC should comprise the wireless energy transfer from the primary coil to the secondary coil. Preferably no energy bypasses a wireless energy transfer.

According to the present disclosure, the primary coil is connected to one of the stack nodes via a switch, i.e., can be selectively connected to one of the stack nodes via the switch. Preferably, the stack nodes are connected to each other via the primary coil, when the switch is set conductive. Further preferred, the stack nodes are not connected to each other or short-circuited to each other, when the switch is set non-conductive. Further, the stack nodes are not connected to each other via the stack nodes, when the switch is set non-conductive. The switch may at the same time control a power conversion via the DCDC converter, e.g., by setting a duty cycle of the DCDC converter, in a case the switch is set conductive. In other words, setting the switch conductive may also comprise setting the switch conductive intermittently, while setting the switch non-conductive means setting the DCDC inactive.

In the battery system of the present disclosure, a threshold signal which is indicative of a voltage at the supply node is generated in the LV battery subsystem. Therein, the threshold signal may be directly represent the voltage at the supply node or may be associated to the voltage at the supply node in a predefined manner. The threshold signal may be an analogue signal or a binary signal generated based on an analogue signal. Further, the threshold signal is transmitted to the HV battery subsystem. In the HV battery subsystem, the threshold signal is received and the state of the switch, i.e., the conductivity state of the switch, is controlled based on the threshold signal. Therein, the state may be controlled directly by the threshold signal in that the threshold signal is a control signal for setting the conductivity of the switch. However, the threshold signal may also be received by a switch controller disposed in the HV battery subsystem and configured to control the switch based on the threshold signal.

The battery system of the present disclosure advantageously provides a redundant power supply for the supply node and thus any security relevant load connected thereto. At the same time, the battery system of the present disclosure ensures that components of the HV battery subsystem that contributes to electromagnetic interference, EMI, particularly the DCDC converter and the switch (switching noise), are only operated cases, where the redundant power supply to the supply node by the HV battery subsystem is indeed needed. In other words, in the redundant power supply of the present disclosure additional electromagnetic shielding means or filter elements for avoiding EMI disturbances can be advantageously omitted, thus reducing the costs and space requirements of the system.

In a preferred embodiment of the battery system of the present disclosure, the LV battery subsystem comprises a comparator, wherein in the context of this disclosure a comparator denotes any analogue or integrated circuit or circuit component that is capable of comparing two voltages with each other and to output a signal based on the result of the comparison. According to this embodiment, the comparator comprises a first input node that is connected to the supply node and receives the voltage at the supply node. The comparator further comprises a second input node that is connected to a predetermined reference voltage, V_{REF}, which is generated in a usual manner, e.g., based on the supply voltage of the LV battery. Based on the input voltages, the comparator generates and outputs the threshold signal, preferably via an output node of the comparator. However, the threshold signal transmitted to the HV battery subsystem may also be a voltage value applied to the supply node and a comparison to a reference voltage V_{REF} may be also carrier out in the HV battery subsystem.

Further preferred, the threshold signal is transmitted via an optocoupler from the LV battery subsystem to the HV battery subsystem. Therein, the optocoupler preferably comprises a light source that is disposed in the LV battery subsystem and that is configured to generate a light signal that is indicative of a voltage at the supply node. Therefore, the light source may receive the threshold signal generated by the comparator as described above. However, the light source may also receive the voltage applied to the supply node as a direct input. The optocoupler further comprises a photo detector disposed in the HV battery subsystem and configured to detect a light signal incident thereon and to generate an output signal based on the light signal. The signal output of the photo detector may be then used to control the switch in the HV battery subsystem, either directly or by starting the operation of a switch controller. The use of an optocoupler advantageously allows to transmit the threshold signal from the LV battery subsystem to an electrically isolated HV battery subsystem, thus further reducing EMI.

According to the present disclosure, the switch is preferably set switching if the threshold signal is indicative of a voltage below a threshold voltage, V_{TH}. Therein, the threshold voltage may be identical to the reference voltage as described above. However, the threshold voltage may also differ from the reference voltage and/or the voltage comparison may be carried out in the HV battery subsystem. Further, the switch is preferably set non-conductive if the threshold signal is indicative of a voltage above a threshold voltage, V_{TH}. In other words, the switch is set non-conductive as long as a sufficient voltage above the threshold voltage is supplied to the supply node by the LV battery. In the present disclosure, the switch may be a semiconductor switch, e.g., a transistor based switch, or an electromechanical switch, e.g., a relay switch. Setting the switch switching refers to setting the switch conductive, particularly with an intermittent conductivity of the switch, e.g., during a PWM operation of a switch under the control of a switch controller.

In the battery system according to the present disclosure, a stack voltage supplied by the battery cell stack is provided to the primary coil if the switch is set switching. By applying the stack voltage to the primary coil, a current flows through the primary coil and generates a magnetic field. By the variations in the magnetic field a current is induced in the secondary coil and therefore a stepped-down voltage is provided to the supply node by the secondary coil. Therein, the stepped-down voltage is lower than the stack voltage, which is ensured by setting a suitable ratio of the dimension and/or winding count of primary and secondary coil.

If the voltage supplied to the supply node by the LV battery drops below V_{REF}, the switch is set switching and the supply node is redundantly power supplied by the battery cell stack. Particularly preferred, the stack voltage is 48V, 60V, or higher and the supply voltage of the LV battery is about 12V to 24V. Due to normal variations, the supply voltage of the LV battery may vary between a lower bound of about 6V to 8V and an upper bound of about 12V to 24V. Hence, the threshold voltage, VTH, and/or the reference voltage, VREF, may be lower than the nominal supply voltage of the LV battery in order to reliably limit the operation of the DCDC converter to situations where sufficient supply of the supply node cannot be ensured.

Further preferred, the LV battery subsystem comprises a buffer capacitor that is interconnected between the supply node and ground. Further preferred, the supply node is interconnected between the buffer capacitor and the LV battery. Hence, the LV battery charges the buffer capacitor and the voltage at the supply node is stabilized by the buffer capacitor. When the supply by the LV battery is ceased abruptly, the use of the buffer capacitor advantageously allows for a supply of the supply node until the DCDC converter starts its operation for providing the stepped-down voltage. Hence, always-on operation of the DCDC converter can be avoided while ensuring sufficient voltage supply to the supply node. Further, the buffer capacitor limits the voltage applied to the supply node when supplied with the stepped-down voltage by the DCDC converter and filters out noisy AC components.

In another preferred embodiment, the LV battery subsystem further comprises a diode that is interconnected between the LV battery and the supply node, wherein the cathode of the diode is connected to the supply node and the anode of the diode is connected to the LV battery. In the context of the present disclosure, a diode refers to any component or circuitry interconnected between the LV battery and the supply node that allows an electric current to flow from the LV battery to the supply node but prevents an electric current to flow from the supply node towards the LV battery. Hence, an overcharging or malfunction of the LV battery can be avoided by applying the stepped-down voltage to the LV battery in a state where the LV battery cannot longer power supply the supply node with at least the threshold voltage. Further preferred, the LV battery subsystem comprises at least one low voltage load that is interconnected between the diode and the LV battery. Therein, the at least one LV load preferably is not a security relevant load for the operation of the battery system and/or the vehicle. With the preferred setup, power supply of the LV load by the stepped-down voltage and hence power drain from the preferably security relevant supply node is reliably avoided.

Further preferred, the HV battery system comprises at least one relay for disconnecting the battery cell stack, e.g., from a downstream load, a vehicle chassis and/or control electronics. According to this embodiment, a relay monitoring circuit is preferably connected to the supply node. Usually, the electronic control units of the battery system and/or the vehicle, such as e.g., a battery management system, BMS, is operated by the LV battery. Hence, if the LV battery supply is unintentionally lost, a relay that galvanically disconnects the battery cell stack from a HV board net may open, while the BMS cannot determine the current through the relay at the time when the relay contact is opened. Hence, a physical damage to the relay contact would remain unknown, rendering reactivation, i.e., closing, the relay, unsafe. However, by power supplying the relay monitoring circuit via the supply node in a redundant manner by the LV and HV battery subsystem, wherein the relay monitoring circuit is configured to determine a current through the relay (contact), such an unsafe state of the relay contact can be reliably avoided and hence relay reactivation can be safely performed. Further preferred, a relay monitoring and control circuit is connected to the supply node, wherein such circuit is further configured to control the conductivity state of the relay.

An operation voltage of the LV battery subsystem preferably has a lower boundary voltage between 6V and 8V and an upper boundary voltage between 12V and 24V. Further preferred, the voltage threshold V_{TH} is at least 0.5V below the lower boundary voltage of the operation voltage of the LV battery system. Thus, the operation of the DCDC converter is reliably restricted to cases of insufficient power supply by the LV battery and excess EMI is avoided.

Further preferred, the DCDC converter is a galvanically isolated DCDC converter and particularly preferred, the DCDC converter is one of a flyback converter, a forward converter, or a push-pull converter. However, other galvanically isolated DCDC converter can be used.

Another aspect of the present disclosure relates to a vehicle, preferably an electric or hybrid vehicle, that comprises a battery system according to the present disclosure as described above, wherein at least one HV load is supplied by the HV battery system and at least one LV load is supplied by the LV battery system. Preferably, the at least one HV load comprises an electric motor and the at least one LV load comprises a security relevant battery system and/or vehicle control unit which is power supplied by the supply node of the LV battery subsystem. Other LV loads may be supplied by the LV battery directly. Further preferred embodiments of the vehicle correspond to preferred embodiments of the battery system.

Further aspects of the present invention are disclosed in the dependent claims or can be learned from the following description of the embodiments illustrated in the drawings.

### Brief Description of the Drawings

Features will become apparent to those of ordinary skill in the art by describing in detail exemplary embodiments with reference to the attached drawings in which:
- Fig. 1: schematically illustrates a battery system 100 according to a first embodiment;
- Fig. 2: schematically illustrates a battery system 100 according to a second embodiment; and
- Fig. 3: schematically illustrates a battery system 100 according to a third embodiment.

### Detailed Description of the Drawings

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

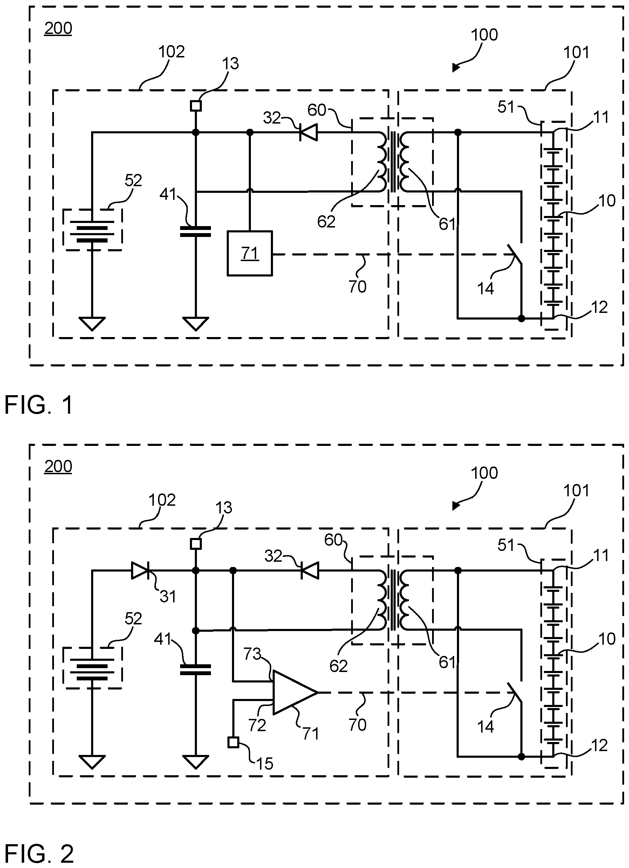

Figure 1 schematically illustrates a battery system 100 according to a first embodiment of the present disclosure. The battery system 100 is located in an electric vehicle 200 and is configured to power supply the electric vehicle 200. Therefore, the battery system 100 comprises a HV battery subsystem 101 that comprises a battery cell stack 51 with a plurality of battery cells 10 interconnected between a first stack node 11 and a second stack node 12. The battery cell stack 51 is configured to supply a high voltage of at least 48V, 60V, or even higher that can be used to propel an electric motor of the electric or hybrid vehicle 200. The battery system 100 further comprises a LV battery subsystem 102 with a LV battery 52, such as e.g., a 12V lead acid battery. The LV battery 52 is configured to a supply a LV board net of the vehicle 200 comprising a plurality of LV loads, among them security relevant LV loads.

The LV battery subsystem 102 further comprises a supply node 13 that is connected to the LV battery 52 and is power supplied by the LV battery 52. A buffer capacitor 41 is interconnected between the supply node 13 and ground, wherein the supply node 13 is interconnected between the buffer capacitor 41 and the LV battery 52. The buffer capacitor 41 thus limits the voltage applied to the supply node 13 by the LV battery 52. At least one security relevant LV node (not shown) is connected to the supply node 13.

The HV battery subsystem 101 and the LV battery subsystem 102 are connected to each other via a DCDC converter 60 in a galvanically isolated manner. The DCDC converter 60 comprises a primary coil 61 disposed in the HV battery subsystem 101 and a secondary coil 62 disposed in the LV battery subsystem 102. Therein, the ratio of the windings of the primary coil 61 and of the secondary coil 62 is such that the DCDC converter 60 functions as a step-down converter from the HV battery subsystem 101 to the LV battery subsystem 102.

The primary coil 61 is connected to the battery cell stack 51 via a switch 14, which is either an electromechanical switch, e.g., a relay, or a semiconductor switch, e.g., a transistor. If the switch 14 is set conductive, the stack nodes 11, 12 are connected to each other via the primary coil 61. If the switch 14 is set non-conductive, the stack nodes 11, 12 are either disconnected or shorted to each other via a HV board net comprising HV loads (not shown), i.e., the stack nodes are not connected to each other via the primary coil 61. The LV battery subsystem 102 comprises a second diode that is interconnected between the supply node 13 and the secondary coil 62, wherein the cathode of the second diode 32 is connected to the supply node 13 and the anode of the second diode 32 is connected to the secondary coil 62.

In the embodiment of Figure 1, the switch 14 is controlled by a switch controller 71 that is located in the LV battery system 102. The switch controller 71 is connected to the supply node 13 and receives a voltage applied to the supply node 13 as an input signal. Based on the received supply node voltage, the switch controller 71 transmits a threshold signal 70 that is indicative of the voltage at the supply node 13 to the HV battery subsystem 101. Based on the threshold signal 70, the switch 14 in the HV battery subsystem 101 is operated, i.e., set either switching or non-conductive. Particularly, the switch 14 is set switching, if the voltage at the supply node 13 is less than a predetermined threshold voltage, V_{REF}, which is insufficient to reliably power supply the at least one security relevant LV load (not shown).

In the embodiment of Figure 1, the switch controller 71 solely controls a general state of the switch 14 to be either switching or non-conductive. Therein, the operation state of the switch 14 being switching does not refer to that the switch 14 is continuously set conductive. The HV battery subsystem 101 may comprise another switch controller (not shown) that controls the switching state, such as e.g., a duty ratio of switch 14, during a switching state of switch 14 set by the switch controller 71 in the LV battery subsystem 101. In other words, even in the switching state determined by switch controller 71 (i.e., threshold signal 70), a switch controller of the HV battery subsystem 101 may set switch 14 non-conductive in an intermittent manner. By such controls, the switch 14 can be supply the stack voltage of battery cell stack 51 to the primary coil 61 for generating a stepped down voltage in the secondary coil 61 which is then supplied to the supply node 13 as shown in Figure 1. Hence, a redundant power supply to supply node 13 is ensured while excess EMI is reduced.

Figure 2 schematically illustrates a battery system 100 according to a second embodiment of the present disclosure. In Figure 2 identical reference signs to those of in Figure 1 refer to identical components as in Figure 1 and a repeated description thereof is hence omitted. In the battery system 100 of Fig. 2, the LV battery subsystem 101 further comprises a diode 31 that is interconnected between the LV battery 51 and the supply node 13 so as to suppress a current flowing from the supply node 13 to the LV battery 51. Hence, the stepped-down voltage supplied by the secondary coil 62 is not supplied to the LV battery 52. Further, not security relevant LV loads (not show) can be interconnected between the diode 31 and the LV battery 52 such that the stepped-down voltage is also not supplied to the not security relevant LV loads. Hence, voltage drainage by the LV battery 52 or those not security relevant LV loads can be avoided in order to ensure reliable supply of the supply node 13.

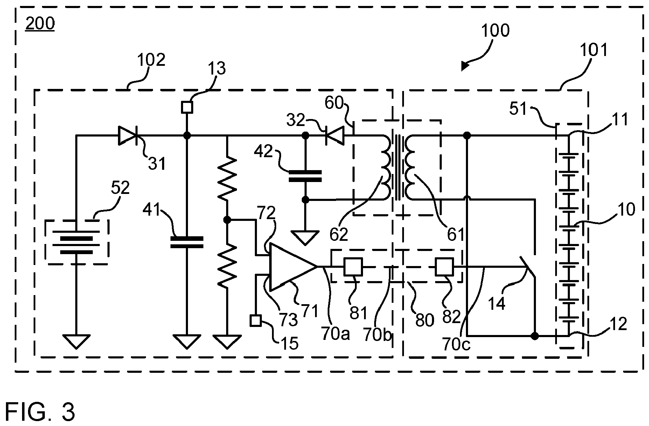

Further, the LV battery subsystem 102 comprises a comparator 71 with a first input node 72 that is connected to the supply node 13 and a second input node 73 that is connected to a reference voltage node 15. The first input node 72 receives the voltage applied to the supply node 13 and the second input node 73 receives a reference voltage, V_{REF}, from reference voltage node 15. The comparator 71 compares these two input voltages and outputs the threshold signal 70 based on the comparison. In the embodiment of Figure 2, the threshold signal takes a high value (e.g., "1" or "VDD"), if the voltage at supply node 13 exceeds the reference voltage and takes a low value (e.g., "0" or "VSS"), if the voltage at supply node 13 falls below the reference voltage supplied from reference voltage node 15. However, other implementations of the comparator 71 are possible. The threshold signal 70 is transmitted by the comparator 71 to the galvanically isolated HV battery subsystem 101, particularly to a switch controller (not shown) in the HV battery subsystem 101. The switch controller (not shown) in the HV battery subsystem 101 does not perform an operation of the normally off, i.e., non-conductive, switch 14 in response to a high threshold signal 70 and performs a control operation for the switch 14 in response to a low threshold signal 70. Therein, the switch controller in the HV battery subsystem 101 may be a PWM controller for the switch 14. Figure 3 schematically illustrates a battery system 100 according to a third embodiment of the present disclosure. In Figure 3 identical reference signs to those of Figures 1 and 2 refer to identical components as in Figures 1 and 2 and a repeated description thereof is omitted.

In the battery system 100 of Figure 3, the DCDC converter 60 is setup as a flyback converter and the LV battery subsystem 102 further comprises a second capacitor 42 that is charged by the secondary coil 62 and is interconnected between the cathode of the second diode 32 and a ground potential. Hence, a filtered DC component of the stepped-down voltage is reliably supplied to the supply node 13 by the secondary coil 62.

Further, in the battery system of Figure 3 the comparator 71 is connected to the supply node 13 via a voltage divider for limiting the voltage input to the first input node 72 for improving the comparison with the reference voltage V_{REF}. The battery system 100 of Figure 3 further comprises an optocoupler 80 with laser diode 81 in the LV battery subsystem 101 and a combined photocell and switch controller 82 in the HV battery subsystem 102.

The output of the comparator 71 is a first wire-based component 70a of the threshold signal that is generated by the comparator 71 based on the voltage comparison as described above. The first wire-based threshold signal 70a is supplied to the laser diode 81 that is configured to generate a light signal based on the first wire-based threshold signal 70a, such as e.g., to generate a light signal in response to a high threshold signal 70a and to not generate a light signal in response to a low threshold signal 70b. However, also light signals of different intensities can be generated in response to a low or high first threshold signals 70a.

The generated light signal is transmitted as a wireless component 70b of the threshold signal 70 to the galvanically isolated HV battery subsystem 101, where it is received of the photo cell (photo diode) of the switch controller 82. Based on whether or not a light signal 70b is received or based on the intensity of the received light signal 70b, the switch controller 82 outputs a second wire-based threshold signal 70c to the switch 14. Therein, the second wire-based threshold signal 70c may only be transmitted in response to receiving a low threshold signal 70b or may be transmitted with different values based on the received wireless signal 70b. Further, the second wire-based threshold signal 70c may be further modulated in order to serve as a PWM control signal for switch 14 in case of a low threshold signal 70a, 70b. This setup allows to reduce electromagnetic interference in the battery system 100.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the disclosure.

### Reference signs

- 10: battery cell
- 11: first stack node
- 12: second stack node
- 13: supply node
- 14: switch
- 15: reference voltage node, V_{REF}
- 31: first diode
- 32: second diode
- 41: buffer capacitor
- 42: second capacitor
- 51: battery cell stack
- 52: LV battery
- 60: DCDC converter
- 61: primary coil
- 62: secondary coil
- 70: threshold signal
- 70a: first wire-based threshold signal
- 70b: wireless threshold signal
- 70c: second wire-based threshold signal
- 71: comparator
- 72: first input node
- 73: second input node
- 80: optocoupler
- 81: laser diode
- 82: photocell/switch controller
- 100: battery system
- 101: HV battery subsystem
- 101: LV battery subsystem
- 200: vehicle

## Claims

1. Battery system (100) for an electric vehicle, comprising:
a high voltage, HV, battery subsystem (101) comprising a battery cell stack (51) with a plurality of battery cells (10) electrically connected between stack nodes (11, 12);
a low voltage, LV, battery subsystem (102) comprising a LV battery (52) and a supply node (13) connected to the LV battery (52);
a DCDC converter (60) with a primary coil (61) in the HV battery subsystem (101) and a secondary coil (62) in the LV battery subsystem (102), wherein the primary coil (61) is connected to one of the stack nodes (11, 12) via a switch (14),
wherein a threshold signal (70) indicative of a voltage at the supply node (13) is generated in the LV battery subsystem (102) and is transmitted to the HV battery system (101), and
wherein the state of the switch (14) is controlled based on the threshold signal (70).

2. Battery system (100) according to claim 1, wherein the LV battery subsystem (102) comprises a comparator (71) with a first input node (72) connected to the supply node (13) and a second input node (73) connected to a predetermined reference voltage, V_{REF}, and wherein the threshold signal (70) is output by the comparator (71).

3. Battery system (100) according to claim 1 or 2, wherein the threshold signal (70) is transmitted via an optocoupler (80) from the LV battery subsystem (102) to the HV battery subsystem (101).

4. Battery system (100) according to any one of the preceding claims, wherein the switch (14) is set switching if the threshold signal (70) is indicative of a voltage below a threshold voltage, V_{TH}, and wherein the switch (14) is set non-conductive if the threshold signal is indicative of a voltage above the threshold voltage, V_{TH}.

5. Battery system (100) according to any one of the preceding claims, wherein, if the switch is set switching, a stack voltage is provided to the primary coil (61), and a stepped-down voltage is provided to the supply node (13) by the secondary coil (62).

6. Battery system (100) according to claim 5, wherein the stack voltage is 48 V or higher and/or wherein the stepped-down voltage is 24 V or lower.

7. Battery system (100) according to any one of the preceding claims, wherein the LV battery subsystem (102) comprises a buffer capacitor (41) that is interconnected between the supply node (13) and ground.

8. Battery system (100) according to any one of the preceding claims, wherein the LV battery subsystem (102) comprises a diode (31), the cathode of which is connected to the supply node (13) and the anode of which is connected to the LV battery (52).

9. Battery system (100) according to claim 8, wherein the LV battery subsystem (102) comprises at least one low voltage load interconnected between the diode (31) and the LV battery (52).

10. Battery system (100) according to any one of the preceding claims, wherein the HV battery subsystem (101) comprises at least one relay for disconnecting the battery cell stack (51) and wherein a relay monitoring circuit is connected to the supply node (13).

11. Battery system (100) according to any one of the preceding claims, wherein an operation voltage the LV battery subsystem (102) has a lower boundary voltage between 6 V and 8 V and an upper boundary voltage between 12 V and 24 V.

12. Battery system (100) according to claims 4 and 10, wherein the voltage threshold V_{TH} is at least 0.5 V below the lower boundary voltage of the operation voltage.

13. Battery system (100) according to any one of the preceding claims, wherein the DCDC converter (60) is a galvanically isolated DCDC converter and/or wherein the DCDC converter (60) is a flyback converter, a forward converter, or a push-pull converter.

14. Vehicle (200) comprising a battery system (100) according to any one of the preceding claims 1 to 13, wherein at least one HV load is supplied by the HV battery subsystem (101) and at least one LV load is supplied by the LV battery subsystem (102).

15. Vehicle (200) according to claim 14, wherein the at least one HV load comprises an electric motor and wherein the at least one LV load comprises a safety relevant vehicle control unit.

## Amended claims

### Amended claims in accordance with Rule 137(2) EPC.

1. Battery system (100) for an electric vehicle, comprising:
a high voltage, HV, battery subsystem (101) comprising a battery cell stack (51) with a plurality of battery cells (10) electrically connected between stack nodes (11, 12);
a low voltage, LV, battery subsystem (102) comprising a LV battery (52) and a supply node (13) connected to the LV battery (52);
a DCDC converter (60) with a primary coil (61) in the HV battery subsystem (101) and a secondary coil (62) in the LV battery subsystem (102), wherein the primary coil (61) is connected to one of the stack nodes (11, 12) via a switch (14),
wherein a threshold signal (70) indicative of a voltage at the supply node (13) is generated in the LV battery subsystem (102) and is transmitted to the HV battery system (101), and
wherein the state of the switch (14) is controlled based on the threshold signal (70),
wherein the LV battery subsystem (102) comprises a comparator (71) with a first input node (72) connected to the supply node (13) and a second input node (73) connected to a predetermined reference voltage, V_{REF}, and wherein the threshold signal (70) is output by the comparator (71), and
wherein the HV battery subsystem (101) and the LV battery subsystem (102) are connected to each other via the DCDC converter (60) in a galvanically isolated manner.

2. Battery system (100) according to claim 1, wherein the threshold signal (70) is transmitted via an optocoupler (80) from the LV battery subsystem (102) to the HV battery subsystem (101).

3. Battery system (100) according to any one of the preceding claims, wherein the switch (14) is set switching if the threshold signal (70) is indicative of a voltage below a threshold voltage, V_{TH}, and wherein the switch (14) is set non-conductive if the threshold signal is indicative of a voltage above the threshold voltage, V_{TH}.

4. Battery system (100) according to any one of the preceding claims, wherein, if the switch is set switching, a stack voltage is provided to the primary coil (61), and a stepped-down voltage is provided to the supply node (13) by the secondary coil (62).

5. Battery system (100) according to claim 4, wherein the stack voltage is 48 V or higher and/or wherein the stepped-down voltage is 24 V or lower.

6. Battery system (100) according to any one of the preceding claims, wherein the LV battery subsystem (102) comprises a buffer capacitor (41) that is interconnected between the supply node (13) and ground.

7. Battery system (100) according to any one of the preceding claims, wherein the LV battery subsystem (102) comprises a diode (31), the cathode of which is connected to the supply node (13) and the anode of which is connected to the LV battery (52).

8. Battery system (100) according to claim 7, wherein the LV battery subsystem (102) comprises at least one low voltage load interconnected between the diode (31) and the LV battery (52).

9. Battery system (100) according to any one of the preceding claims, wherein the HV battery subsystem (101) comprises at least one relay for disconnecting the battery cell stack (51) and wherein a relay monitoring circuit is connected to the supply node (13).

10. Battery system (100) according to any one of the preceding claims, wherein an operation voltage the LV battery subsystem (102) has a lower boundary voltage between 6 V and 8 V and an upper boundary voltage between 12 V and 24 V.

11. Battery system (100) according to any one of the preceding claims, wherein the reference threshold V_{REF} is at least 0.5 V below the lower boundary voltage of the operation voltage.

12. Vehicle (200) comprising a battery system (100) according to any one of the preceding claims 1 to 13, wherein at least one HV load is supplied by the HV battery subsystem (101) and at least one LV load is supplied by the LV battery subsystem (102).

13. Vehicle (200) according to claim 12, wherein the at least one HV load comprises an electric motor and wherein the at least one LV load comprises a safety relevant vehicle control unit.
